# EUROPEAN PATENT SPECIFICATION

(11) **EP 1 770 982 B1**
(45) Date of publication and mention of the grant of the patent: **08.05.2019**
(21) Application number: 06254993.6
(22) Date of filing: 27.09.2006
(51) Int. Cl.: H04N 1/32

(54) **Data transmission system, data transmission method, data transmission apparatus, and computer usable medium therefor**
Datenübertragungssystem, Datenübertragungsverfahren, Datenübertragungsgerät und rechnerlesbares Medium
Système de transmission de données, procédé de transmission de données, dispositif de transmission de données, et médium utilisable par un ordinateur

(30) Priority: 28.09.2005 JP 2005282836
(43) Date of publication of application: 04.04.2007
(73) Proprietor: Brother Kogyo Kabushiki Kaisha, Nagoya-shi, Aichi-ken 467-8561 (JP)
(72) Inventor: Wakazono, Tomomi, Brother Kogyo Kabushiki Kaisha, Nagoya-shi Aichi-ken 467-8562 (JP)
(74) Representative: J A Kemp

(56) References cited:
- US-A1- 2003 084 050
- US-A1- 2003 163 707
- US-A1- 2005 192 945
- US-A1- 2005 204 145
- US-A1- 2005 204 145

## Description

### Cross Reference to Related Application

This application claims priority from Japanese Patent Application No.2005-282836, filed on September 28, 2005.

### Background

### Technical Field

Aspects of the present invention relate to a data transmission system, data transmission method, data transmission device and a computer usable medium therefor.

### Related Art

In an MFP (multiple function peripheral) having a plurality of functions, such as a function for printing to output data obtained from a facsimile device and other external devices, a function for copying to scan documents to generate image data and to output images based on the scanned image data, and a facsimile function to communicate with other facsimile devices, conventionally such a facsimile function including registering transmission destinations and calling out one of the registered destinations to transmit the documents by a predetermined button operation are often used.

There is a known system called "directory service" for managing personal information and account information. Also, there is a known system configured for storing information of transmission destinations in the directory server and calling out the destination information stored in the server from the MFP to transmit documents.

As an example of such a device, i.e., an image forming apparatus, employing the service to obtain the destination information from an information administrating server such as an LDAP server is disclosed in Japanese Patent Provisional Publication No. 2004-274486 .

US 2003/0084050, discloses a method and system for facilitating the retrieval of data from a database using a communications device. According to this document, the database is stored remotely from the communications device, and as such data can be obtained remotely from a user's remotely stored personal database.

US 2005/0204145 discloses an image processing apparatus, method, and program to discriminate and process varying pieces of image data for materials corresponding to individual participants at a meeting. The apparatus includes a user authentication section that acquires ID information to identify each user from among a plurality of users. Further prior art is known from document US 2005/192945.

### Summary

According to the invention, there is provided a communication system, a communication apparatus, and a method of controlling a communication system as set out in the claims.

Aspects of the present invention are advantageous in that a data transmission system, a data transmission method, a data transmission apparatus, and a computer usable medium therefor wherein the destination information database is easy to use while personal information is protected against unauthorized use, is provided.

The following describes general aspects of the invention that may or may not be included in various examples and modifications. It should be noted that various connections are set forth between elements in the following description. It should be noted that these connections in general and, unless specified otherwise, may be direct or indirect and that this specification is not intended to be limiting in this respect.

According to some aspects of the invention, there is provided a communication system, comprising a communication apparatus, an external memory unit, which stores a search criterion for destination information indicating a destination of communication that is designated under a predetermined criterion and is detachably attached to the communication apparatus, is provided. The communication apparatus comprises a reader system, which reads the search criterion stored in the memory unit, a destination information obtaining system, which obtains the destination information that meets the search criterion read by the reader system from a destination information database, and a destination setting system, which designates the destination of communication based on the destination information obtained by the destination information obtaining system.

According to the above configuration, the search criterion is stored in the memory unit, and the destination of communication is designated by obtaining the destination information that meet requirements indicated in the search criterion so that communication can be established between the communication apparatus and the destination which is designated based on the search criterion. With this configuration, for example, when members of a department of an organization are transferred and exchanged while an employee A of the department has been designated as a destination based on a search criterion, a new destination can be automatically designated by updating the destination information database without updating the search criterion.

It should be noted that the communication between the communication apparatus and the designation may not limited to data transmission, but may include telecommunication using a telephone. Further, the destination information database may be provided internally and externally of the communication apparatus.

According to the above configuration, the external memory unit can be attached to and detached from the communication apparatus. When a plurality of external memory units, each of which stores a different search criterion, are provided, a destination of communication that meets a requirement indicated in the search criterion stored in one of the plurality of external memory units can be effectively searched.

Further, when the destination information database is provided externally of the communication apparatus, and the destination information database is shared by a plurality of the communication apparatuses, the destination can be searched as a destination of each communication apparatus by using a same external memory unit.

Optionally, the external memory unit may store authentication information that is used for accessing the destination information database. The communication apparatus may be provided with an authentication information reader system which reads the authentication information from the detachable device, and an accessing system which accesses the destination information database using the authentication information read by the authentication information reader system.

It should be noted that, if a user attempts to access the destination information in the destination information database from a relatively small communication apparatus having no specific input unit such as a keyboard, it would be difficult to authenticate whether the user has a right to use information stored in the destination information database by requesting entry of a user name and a password before permitting the use of the destination information database. According to the above configuration, however, the user accessing the destination information database using the communication apparatus with no specific input unit can be authenticated by using the authentication information stored in the external memory unit.

Optionally, the communication apparatus may further comprise a plurality of communication units to communicate with the destination of communication. The external memory unit may store a first search criterion for designating information that designates the destination of communication and a second search criterion for communication method to communicate with the destination of communication while the designating information and the communication method of the destination of communication are associated with each other to be stored in the destination information database. The destination information obtaining system may obtain the communication method that meets the second search criterion to communicate with the designation of communication that meets the first search criterion from the destination information database. Communication between the communication apparatus and the destination may be established by using one of the plurality of communication units to which the communication method obtained by the destination information obtaining system is applicable.

According to the above configuration, a communication method of the communication apparatus to communicate with the destination can be searched based on the second criterion. Therefore, for example, when the second criterion indicates as to whether the communication is e-mail transmission or facsimile transmission, a suitable communication method for the transmission can be effectively searched.

Optionally, the communication apparatus may further comprise an operation inputting system, wherein an operation from a user is inputted. The reader system may read the search criterion from the memory unit according to the operation inputted through the operation inputting system.

According to the above configuration, for example, as the user inputs a predetermined operation, such as one-touch dialing and speed (abbreviated)-dialing, through the operation inputting system, the destination information according to the operation can be effectively read from the memory unit.

Optionally, the communication apparatus may be capable of obtaining the destination information from a plurality of destination information databases, and may further comprise a judging system, which judges as to whether the destination information has been obtained from one of the plurality of destination information databases by the destination information obtaining system. The destination information obtaining system may obtain the destination information that meets the search criterion from another destination information database when the judging system judges no destination information has been obtained from the one of the plurality of destination information databases.

According to the above configuration, when the destination information cannot be obtained from one of the destination information databases, the destination information can still be obtained from another destination information database.

According to another aspects of the invention, there is provided a communication apparatus, comprising a communication system, capable of communicating with an external memory unit that stores a search criterion for destination information indicating a destination of communication that is designated under a predetermined criterion, a reader system, which reads the search criterion obtained from the external memory unit by using the communication system, a destination information obtaining system, which obtains the destination information designated based on the search criterion read by the reader system from a destination information database, and a destination setting system, which designates the destination of communication based on the destination information obtained by the destination information obtaining system.

According to the above configuration, the external memory unit can be provided externally of the communication apparatus. Thus, when the destination information database is shared by a plurality of the communication apparatuses, the destination can be searched as a destination of each communication apparatus.

According to another aspects of the invention, there is provided a communication system, comprising a communication apparatus, a destination information database wherein destination information indicating a destination of communication with the communication apparatus is stored, and a memory unit, which stores a search criterion for the destination information that is designated under a predetermined criterion. The communication apparatus comprises a reader system, which reads the search criterion stored in the memory unit, a destination information obtaining system, which obtains the destination information designated based on the search criterion read by the reader system from the destination information database, and a destination setting system, which designates the destination of communication based on the destination information obtained by the destination information obtaining system.

According to the above configuration, the communication system wherein the destination information database is easily used by establishing communication between the memory unit and the communication apparatus can be achieved.

According to another aspects of the invention, there is provided a method of controlling a communication system, comprising reading a search criterion for destination information indicating a destination of communication that is designated under a predetermined criterion stored in a memory unit, obtaining the destination information which is designated based on the search criterion read from a destination information database storing the destination information, and designating the destination of communication based on the obtained destination information.

According to the above method, a communication system wherein the destination information database is easily used by establishing communication between the memory unit and a communication apparatus can be achieved.

According to another aspects of the invention, there is provided a computer usable medium comprising computer readable instructions for controlling a computer to execute steps of a reading step to read a search criterion for destination information indicating a destination of communication that is designated under a predetermined criterion stored in a memory unit, a destination information obtaining step to obtain the destination information which is designated based on the search criterion read from a destination information database storing the destination information, and a destination setting step to designate the destination of communication based on the destination information obtained in the destination information obtaining step.

According to the above computer usable medium, a communication system wherein the destination information database is easily used by establishing communication between the memory unit and a communication apparatus can be achieved.

### Brief Description of the Accompanying Drawings

Fig. 1 is a schematic diagram showing an embodiment of a data transmission system according to an embodiment of the invention.
Fig. 2 is a block diagram showing an electrical configuration of an MFP according to the embodiment of the invention.
Fig. 3 illustrates an operation panel according to the embodiment of the invention.
Fig. 4 illustrates Telephone directory stored in the MFP according to the embodiment of the invention.
Fig. 5 is a block diagram showing an electrical configuration of the directory server according to the embodiment of the invention.
Fig. 6 illustrates a hierarchical tree structure in the directory server according to the embodiment of the invention.
Fig. 7 illustrates entry information stored in the directory server according to the embodiment of the invention.
Fig. 8 is a block diagram showing an internal configuration of a memory card according to the embodiment of the invention.
Fig. 9 illustrates search criteria stored in the memory card according to the embodiment of the invention.
Fig. 10 is a flow chart showing a data transmission process according to the embodiment of the invention.
Fig. 11 is a flow chart showing an address directory search process according to the embodiment of the invention.
Fig. 12 is a flow chart showing a query selection process according to the embodiment of the invention.
Figs. 13A-13D illustrate screens shown on a display panel according to the embodiment of the invention.

### Detailed Description

### Embodiments

Hereinafter, referring to accompanying drawings, embodiments of the present invention will be described. A data transmission apparatus in the present invention includes an MFP in which a plurality of functions such as a facsimile transmission/reproduction function, an e-mail transmission function, a printing function, a scanning function, and a copying function are integrated into one. In the embodiments described below, a data transmission system wherein the MFP as a data transmission device having a facsimile transmission/reproduction function is provided in a network will be explained.

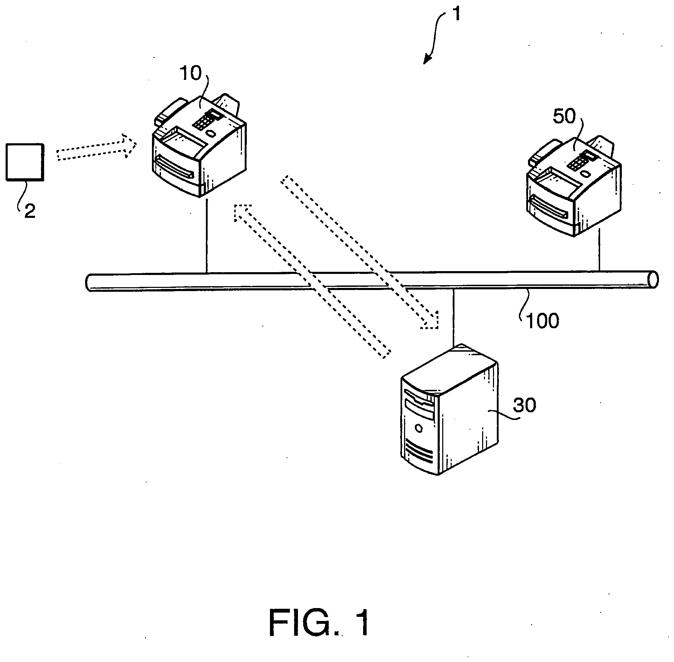

Fig. 1 is a schematic diagram showing the embodiment of the data transmission system 1 according to an embodiment of the present invention In the data transmission system 1 shown in Fig. 1, the MFP 10 is connected to the directory server 30 (e.g. an LDAP (Lightweight Directory Access Protocol) server) in which entry information including destination information is stored through a wired communication network 100. In the wired communication network 100, various cables including a serial communication cable, a parallel communication cable, and a LAN cable may be used. In the present embodiment, a LAN cable is used in the wired communication network 100. Also, a plurality of MFPs 10, 50 may be connected with the wired communication network 100.

Alternatively, the MFP 10 and the directory server 30 can be connected through a wireless communication network. For the wireless communication network, a wireless LAN, an IEEE 802.11x, and a Bluetooth (registered trademark) may be used.

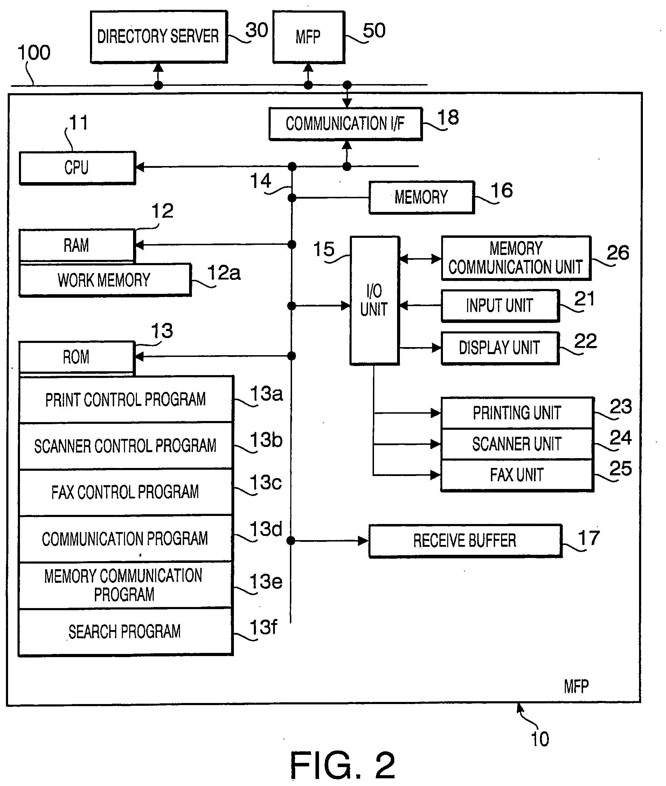

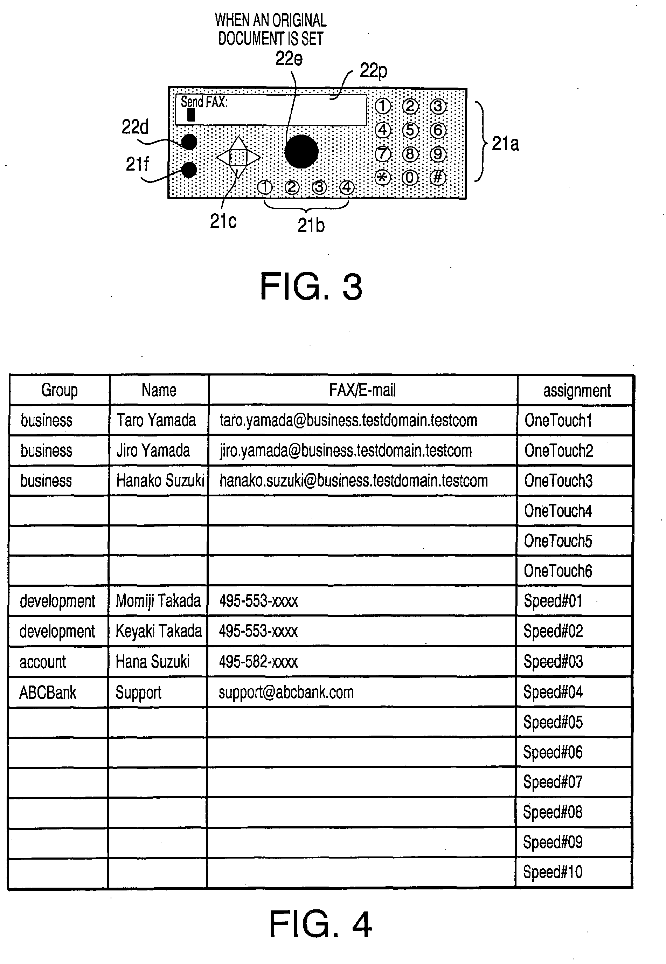

Fig. 2 is a block diagram showing an electrical configuration of the MFP 10 according to the embodiment of the invention. The MFP 10 comprises a CPU 11, a RAM 12 having a work memory 12a, a ROM 13 storing various programs, a bus line 14, an I/O (input/output) unit 15, a nonvolatile memory 16 (e.g. an EEPROM), a two-way communication I/F (interface) 18, which is connected to the wired communication network 100 for sending and receiving data to and from the directory server 30, and a receive buffer memory 17 (hereinafter, referred to as the "receive buffer 17") in which received print control data is temporarily stored. The I/O unit 15 is connected with a memory communication unit 26, which can communicate with a memory card 2 being a mobile memory unit, an input unit 21 having a touch panel (not shown), push-button switches (see Fig. 3), a numerical keypad (see Fig. 3), and the like, a display unit 22 having an LCD (liquid crystal display) (see Fig. 3), and a printing unit 23 having a printing mechanism such as a known ink-jet printing mechanism, a laser printing mechanism, a thermal transfer printing mechanism, and a dot impact printing mechanism. A communication I/F 18 is an interface for wired communication and is connected to the wired communication network 100. A print control program 13a, a scanner control program 13b, a facsimile control program 13c, a communication program 13d, a memory communication program 13e, and a search program 13f are stored in the ROM 13.

Fig. 3 illustrates an operation panel 22a of the input unit 21 and the display unit 22 when an original document is set in the MFP 10 according to the embodiment of the present invention. The operation panel 22a comprises a display panel 22p, input buttons 21a, one-touch dial buttons 21b, selection buttons 21c an Enter button 21d, a transmission start button 21e, and a designation button 21f.

With the operation panel 22a, a user can enter a number sequence such as a telephone number through the input buttons 21a. The operation panel 22a is provided with the one-touch dial buttons 21b having push-buttons, with numeric symbols for example from 1 to 4. Each one-touch dial button 21b is provided with a numeric symbol and can be assigned information such as a telephone number, a facsimile number, an e-mail address, a folder name. With the one-touch dial buttons 21b, the user can select the corresponding information assigned to the one-touch dial buttons 21b simply by specifying the one-touch dial buttons 21b with the corresponding numeric symbols. Therefore, the user can communicate with a specified destination by one-push of one of the one-touch dial buttons 21b.

Further, the operation panel 22a is provided with a designation button 21f, which is used when one of speed-dials is specified. The speed-dials, which are for example two digit numbers from 10 to 99, are registered in association with information such as telephone numbers, facsimile numbers, e-mail addresses. When the speed-dial is used, one of the two digit numbers corresponding to a desired information is specified in combination with the designation button 21f. Thus, the speed-dial allows the user to select the information assigned to the corresponding two digit number simply by specifying the corresponding number and the designation button 21f.

The display panel 22p is designed to display for example numbers inputted through the input buttons 21a in an LCD. When a selection is made from a menu displayed on the display panel 22p by operating the selection buttons 21c and the Enter button 21d, data transmission can be executed by the transmission Start button 21e.

In the present embodiment, the MFP 10 is configured to have the printing unit 23, a scanner unit 24 for copying and image scanning, and a facsimile unit 25, which are connected to the I/O unit 15 to be controlled by the CPU 11. The operation of the printing unit 23, the scanner unit 24, and the facsimile unit 25 is conducted in a known manner, and the corresponding control programs, i.e., the print control program 13a, the scanner control program 13b, and the facsimile control program 13c stored in ROM 13, are controlled operationally by the CPU 11 running the programs on the work memory 12a in the RAM 12.

Further, the MFP 10 comprises an e-mail transmission function for sending and receiving e-mails, which are incorporated with image data for printing, through an external communication network connected to the wired communication network 100. The program to achieve the e-mail transmission function is a known program, and is incorporated in the communication program 13d stored in the ROM 13.

A memory communication program 13e is a program for communication between the memory communication unit 26 in the MFP 10 and the memory card 2. Search criteria stored in the memory card 2 are obtained by the CPU 11 of the MFP 10 by running the memory communication program 13e.

The search program 13f is a program for the MFP 10 to obtain the destination information, which is stored in the directory server 30, when the MFP 10 transmits data. The destination information is searched by the CPU11 of the MFP 10 by running the memory communication program 13f.

In the memory 16 of the MFP 10, Telephone directory (a phone book), in which personal names and company names with the destination information such as telephone numbers and e-mail addresses is stored. Fig. 4 illustrates the Telephone directory stored in the MFP 10 according to the embodiment of the invention. In the phone book, personal names or company names (Names) are stored in associated with affiliations (Group), facsimile numbers or e-mail addresses (FAX/E-mail), and assignments of one-touch dial buttons 21b or speed-dials (assignment). The information included in the Telephone directory can be searched by operating the input unit 21 of the MFP 10, and facsimile transmission to these telephone numbers and the Internet facsimile transmission to the e-mail addresses through a network are available.

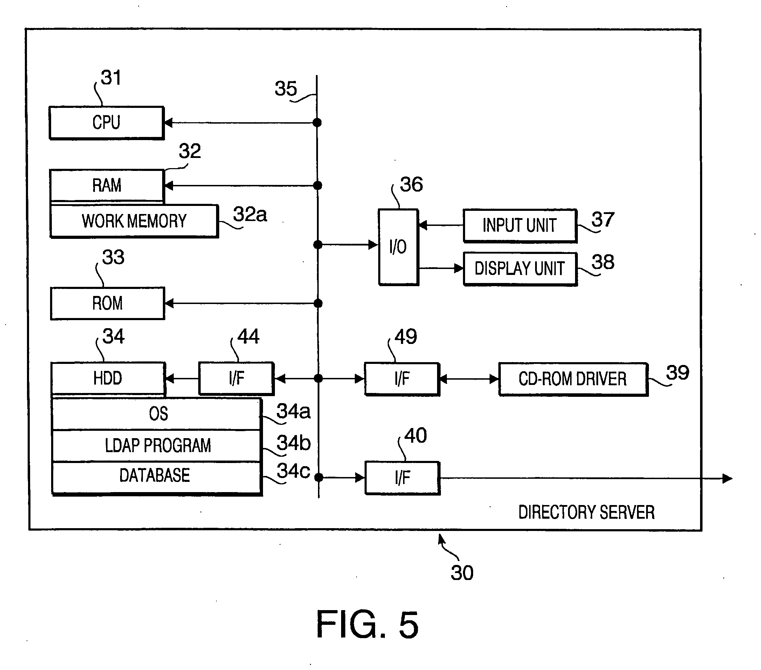

Fig. 5 is a block diagram showing an electrical configuration of the directory server 30 according to the embodiment of the invention.. The directory server 30 is a computer such as a personal computer and a work station provided with a CPU 31, a RAM 32 having a work memory 32a, a ROM 33 storing various programs, an HDD (hard disk drive) 34 as a storage unit, a bus line 35, an I/O unit 36, a CD-ROM drive 39, a two-way communication I/F 40 which is connected to the wired communication network 100 for sending and receiving data such as print control data. The HDD 34 and the CD-ROM drive 39 are connected to the bus line 35 through the I/Fs 44, 49. An OS (operating system) 34a that is the fundamental software for the directory server 30, an LDAP program 34b that is executed to achieve a function of an LDAP server, a database 43c as a destination information database storing information such as entry information are stored in the HDD 34. An input unit 37 having input devices such as a keyboard and a mouse, and a display unit 38 having an LCD or a CRT (cathode ray tube) are connected to the I/O unit 36.

In present embodiment, the directory server 30 is configured as an LDAP server which can be accessed by using the LDAP, and the directory server 30 has a database 43c which stores entry information including the destination information. The database 43c stores personal names and entry information that is specific information associated with the personal names (i.e., affiliations, telephone numbers, facsimile numbers, and e-mail addresses)

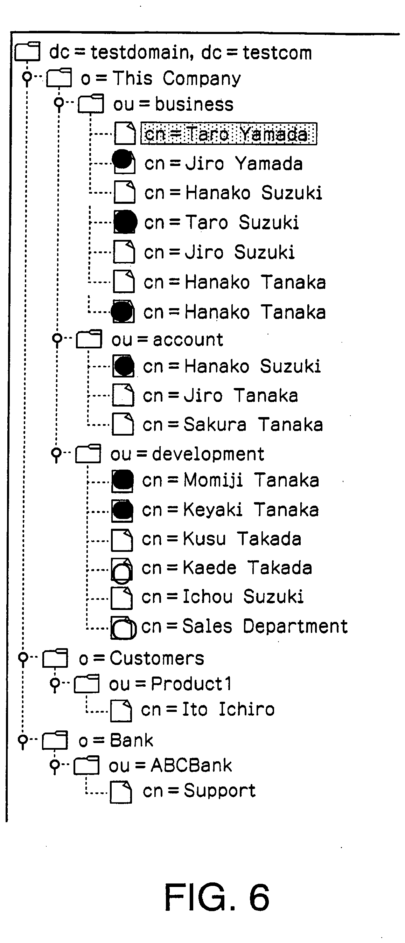

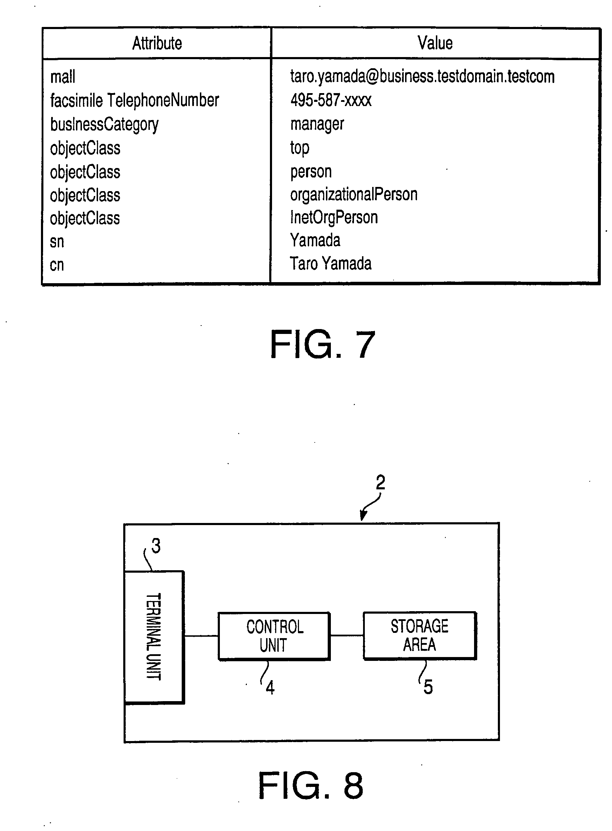

In the directory server 30, persons and organizations are arranged in a hierarchical tree structure, and the information related to each person is stored in the database 43c as individual entry information. Fig. 6 illustrates the hierarchical tree structure in the directory server 30 according to the embodiment of the invention, and Fig. 7 illustrates the entry information stored in the directory server 30 according to the embodiment of the invention. Entry information includes attributes such as "c" (country), "dc" (domain component), "o" (organization), "ou" (organization unit), "cn" (common name), "sn" (surname), "mail" (e-mail address), "telephone" (telephone number) and "facsimileTelephoneNumber" (facsimile number). As shown in Fig. 6, each entry information is hierarchized.

Various requests and responses are exchanged repeatedly between the directory server 30 and the MFP 10 as an LDAP client. For example, when a "search" is requested from the MFP 10 to the directory server 30, the directory server 30 returns "search result" to the MFP 10. By using this function, a search request for the entry information including the destination information (for example the facsimile phone numbers and e-mail addresses) is issued from the MFP 10 to the directory server 30, thus, data transmission such as facsimile transmission, Internet facsimile transmission, and e-mail transmission according to the search results can be executed.

Fig. 8 is a block diagram showing an internal configuration of the memory card 2 according to the embodiment of the invention. The memory card 2 is provided with a terminal unit 3, a control unit 4, and a storage area 5, and the storage area 5 consists of a semiconductor memory in which contents therein can be rewritten. The contents are rewritten by an electric device (not shown) connected electrically through the terminal unit 3. The memory card 2 stores information such as search criteria and passwords. in the storage area 5, and the contents in the storage area 5 are read out by the MFP 10. The memory card 2 may be a noncontact IC memory card which performs data communication through electromagnetic waves without contacting the electric device.

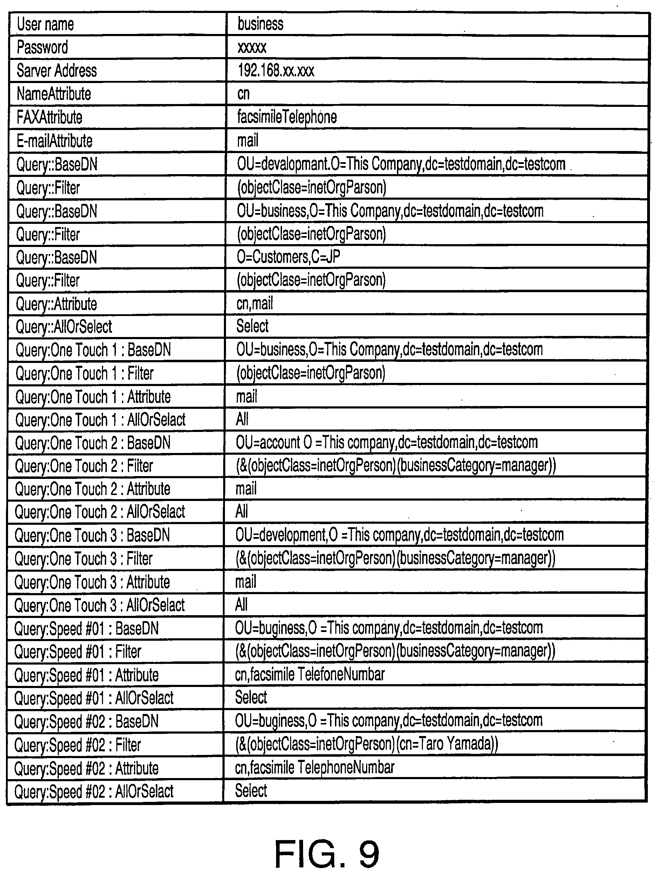

Fig. 9 illustrates the search criteria stored in the memory card 2 according to the embodiment of the invention. "User name" and "Password" are a user name and a password corresponding to the user name. As the MFP 10 reads the memory card 2, the user name and the password are read, and the user logs in the directory server 30. "Server Address" specifies the address of the directory server 30. "NameAttribute", "FAXAttribute", and "E-mailAttribute" indicate the attributes in the entry information, which corresponds to the information (Names and FAX/E-mail) registered in the phone book of the MFP 10, stored in the directory server 30. "NameAttribute", "FAXAttribute", and "E-mailAttribute" respectively correspond to "cn", "facsimileTelephoneNumber", and "mail" in the entry information.

"Query: :BaseDN" represents a root directory for search, and "Query: :Filter" represents the search criteria. For example, "objectClass=inetOrgPerson" incidates a search is conducted upon a criterion wherein a subject is a "person". Further, "&(objectClass=inetOrgPerson)(businessCategory=manager)" indicates a search is conducted upon a criterion wherein a subject is a "person and manager". Furthermore, three occurrences of "Query: :BaseDN" indicate a search is conducted over three directories.

"Query::Attribute" indicates information to be obtained by the search. "cn,mail" indicates a name (cn) and an e-mail address (mail) are obtained. "Query::AllOrSelect" indicates as to whether all or only selected entry information is obtained when entry information is detected.

Further, each occurrence of "Query:One Touch 1" indicates "directory to be searched", "information to be searched", "information to be obtained", and "obtain all/selected information" respectively, when one of the one-touch dial buttons 21b (one-touch dial button "1") is pressed.

Similarly, each occurrence of "Query:Speed #01" indicates "directory to be searched", "information to be searched", "information to be obtained", "obtain all/selected information" respectively, when the speed-dial "01" is specified.

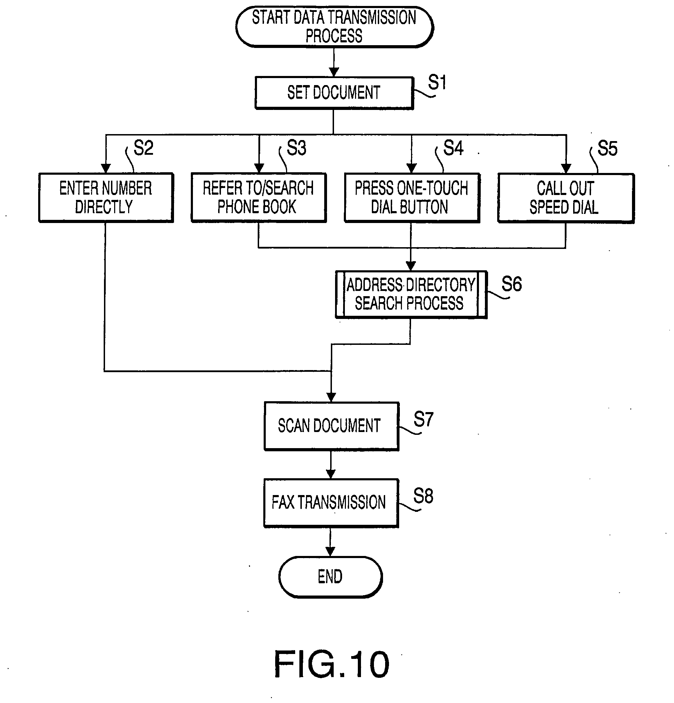

Referring to Fig. 10, a process to be executed in a data transmission is explained hereinbelow. Fig. 10 is a flow chart showing the data transmission process according to the embodiment of the invention. A user sets a document that contains data to be transmitted on the MFP 10 (S1). Thereafter, the user executes one of the following four operations described in S2 through S5. In this context, it should be noted that in order to utilize the entry information in the directory server 30, it is necessary to load the memory card 2 into the MFP 10 in advance so that the search criteria in the memory card 2 can be read out. In S2, the user enters a destination telephone number directly by manipulating the operation buttons of MP10. In S3, the user refers to the registered phone book to search the destination information. In S4, the user presses one of the one-touch dial buttons 21b of the MFP 10. In S5, the user uses the speed-dial of the MFP 10.

When S2 is selected, the MFP 10 scans the document (S7), and executes a conventional FAX transmission process (S8). Thus, the data is transmitted from the MFP 10. In this case, no entry information in the directory server 30 is searched.

When S3, S4, or S5 is selected, the MFP 10 executes an Address directory search process, wherein the entry information registered in the directory server 30 or the Telephone directory registered in the directory server 30 is searched (S6). Thus, a facsimile number is searched for facsimile transmission and an e-mail address is searched for Internet facsimile transmission.

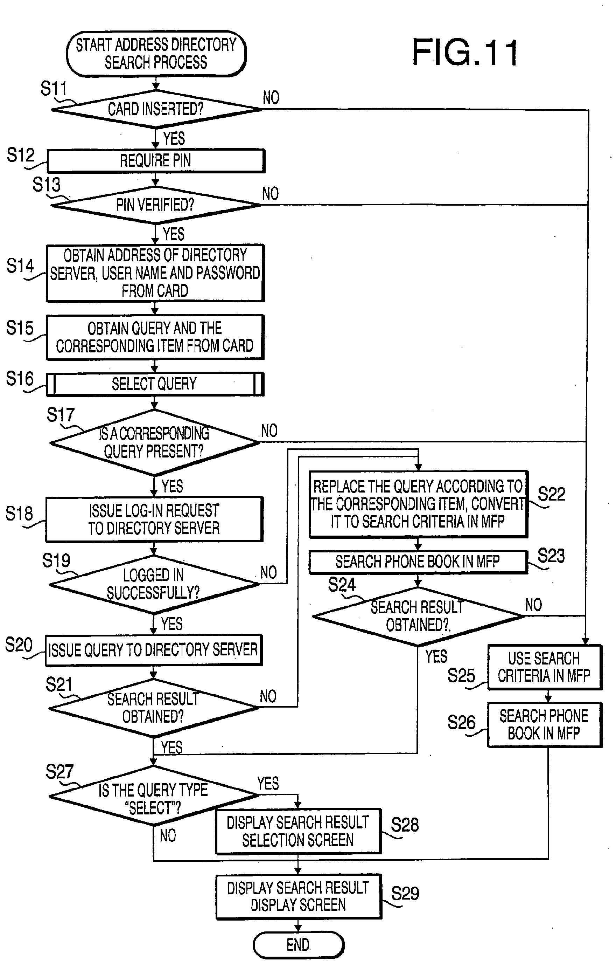

Referring to Fig. 11, the address directory search process is explained hereinbelow. Fig. 11 is a flow chart showing the address directory search process according to the embodiment of the invention. The CPU 11 of the MFP 10 judges whether the memory card 2 has already been inserted in the memory communication unit 26 (S11). If the memory card 2 is in place, the CPU 11 requests the user to enter a PIN (personal identification number) as an identification code (S12). If the CPU 11 judges the PIN is correct (S13: YES), the CPU 11 obtains the address of the directory server 30, the user name, and the password stored in the memory card 2 (S14). Next, the CPU 11 obtains queries and the items corresponding to the queries from the memory card 2 (S15), and executes a query selection process (S16).

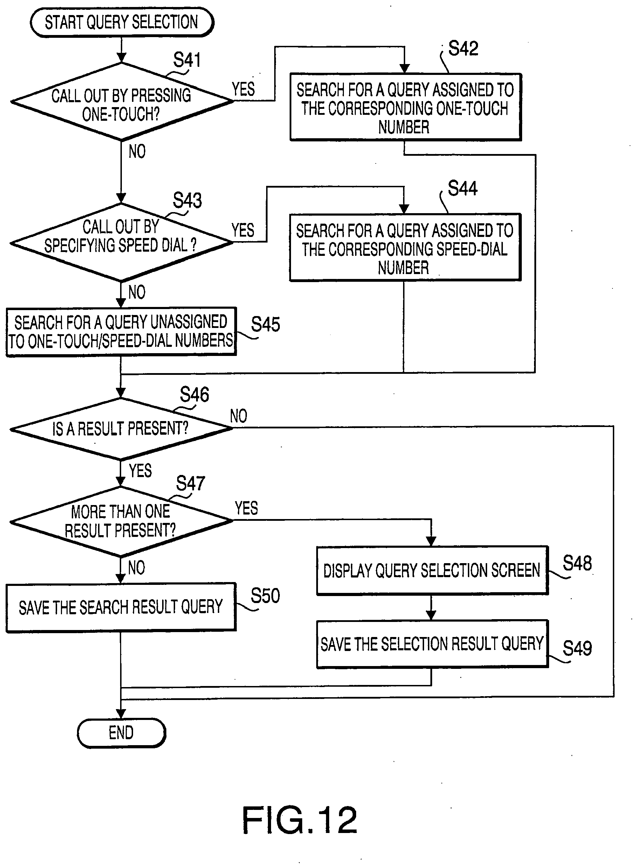

Referring to Fig. 12, the query selection process is explained hereinbelow. Fig. 12 is a flow chart showing a query selection process according to the embodiment of the invention. The query selection process is an operation of the CPU 11 of the MFP 10 to search the queries stored in the memory card 2. As the query selection process is started, if the query selection process was activated by the address directory search process assigned to one of one-touch dial buttons 21b (S41: YES), the CPU 11 of the MFP 10 selects a query assigned to the one-touch buttons 21b that is stored in the memory card 2 (S42). For example, if "1" as one of the one-touch dial buttons 21b is pressed, the CPU 11 of the MFP 10 searches for the "Query:One Touch 1" query stored in the memory card 2.

If the query selection process was not activated by the address directory search process assigned to one of the one-touch dial buttons 21b (S41: No), and if it is activated by the address directory search process assigned to one of a speed-dial (S43: Yes), the CPU 11 of the MFP 10 searches for a query assigned to the corresponding speed-dial number stored in the memory card 2 (S44). For example, if "01" as a speed-dial is specified, the CPU 11 searches for the "Query:Speed #01" query stored in the memory card 2.

If the query selection process was not activated by either of the one-touch dial button 21b or the speed-dial (S43: No), the CPU 11 searches for a query assigned to neither of the one-touch dial button 21b nor the speed-dial numbers stored in the memory card 2 (S45). For example, the CPU 11 searches for "Query: :BaseDN" and "Query::Filter".

Following S42, S44 or S45, the CPU 11 judges whether a corresponding query exists (S46). If no corresponding query is stored in the memory card 2 (S46: No), the CPU 11 terminates the query selection process.

If a corresponding query is stored in the memory card 2 (S46: Yes), and if more than one search result from the corresponding query is found (S47: Yes), the CPU 11 displays a selection screen of the corresponding query wherein one of the search results is selected by the user (S48). Thereafter, the CPU 11 saves the selected query (S49) and terminates the query selection process.

If only one search result from the corresponding query is found (S47: No), the CPU 11 saves the corresponding query as the result query (S50) and terminates the query selection process.

Thus, the CPU 11 in the MFP 10 terminates the query selection process and returns to S16 in Fig. 11. Thereafter, the CPU 11 judges whether a corresponding query was found (S17) in the query selection process in S16, and if no corresponding query was found in the memory card 2 (S17: NO), the CPU 11 obtains the search criteria stored in the MFP 10 (S25) to search the Telephone directory (S26).

If a corresponding query was found (S17: YES), the CPU 11 issues a log-in request to the directory server 30 (S18) based on the address of the directory server 30, the user name and the password obtained in S14 to execute the search process described in the query.

If the log-in to the directory server 30 fails (S19: NO), the CPU 11 replaces the query selected from the memory card 2 with a query described in an internal data format of the MFP 10 based on the items corresponding to the query so that the query is converted into the search criteria in the MFP 10 (S22). The CPU 11 searches the Telephone directory in the MFP 10 (i.e., a destination information database) (S23), and thereafter, if a search result can be obtained from the Telephone directory (S24: YES), the CPU 11 proceeds to S27. If no search result can be obtained (S24: NO), the CPU 11 proceeds to S25.

If the log-in is successful (S19: YES), the CPU 11 issues a query to the directory server 30 (S20). And if no search result of the corresponding information can be obtained from the information stored in the directory server 30 (S21: NO), the CPU 11 proceeds to S22, S23 and searches the Telephone directory in the MFP 10. If a search result of the corresponding information can be obtained from the information stored in the directory server 30 (S21: YES), the CPU 11 judges whether a query type (AllOrSelect) is "Select" (S27); if it is "Select" (S27: YES), the CPU 11 displays a search result selection screen, wherein the user selects one of the queries shown (S28). When a user selects a destination for transmission from the displayed search results, the CPU 11 displays a search result display screen (S29) and saves the search results in the memory 16, thereafter terminates the address directory search process and proceeds to S7 shown in Fig. 10.

If the query type (AllOrSelect) is not "Select" (S27: NO), the CPU 11 displays all the search results on the search result display screen (S29), and saves the search results in the memory 16, thereafter terminates the address directory search process and proceeds to S7 shown in Fig. 10.

Thus, the search criteria to retrieve the destination information from the destination information database as well as the search criteria corresponding to the one-touch dial buttons 21b and the speed-dial are stored in the memory card 2.

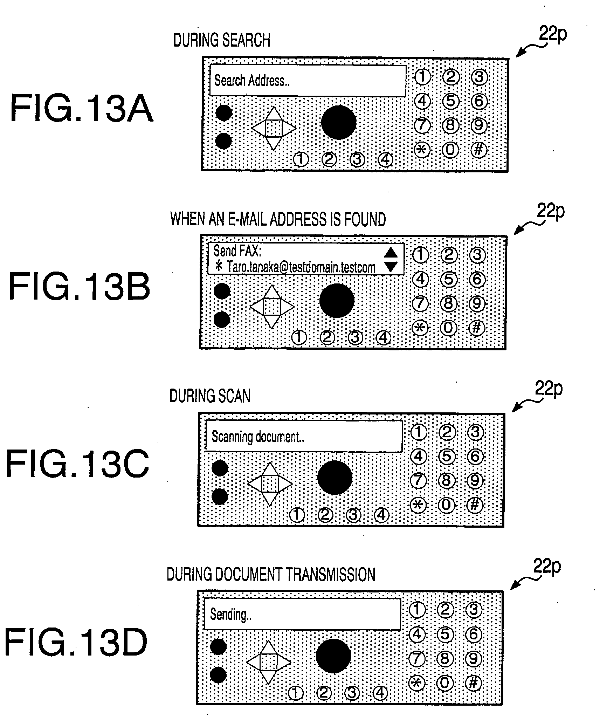

Figs. 13A-13D illustrate screens shown on the display panel 22p according to the embodiment of the invention. Fig. 13A is a screen shown when the entry information and the address directory registered in the MFP 10 are searched. Fig. 13B is a screen showing an e-mail address.

When a desired destination information is retrieved, the MFP 10 scans documents (see Fig. 13C and S7 in Fig. 10) and runs the facsimile control program 13c and the communication program 13d to execute facsimile transmission and Internet facsimile transmission (see Fig. 13D and S8 in Fig. 10).

As described above, by storing information such as the user name, the password, the address of the directory server 30, and the search criteria in the memory card 2, and by storing a unique address of the directory server 30 in each corresponding memory card 2, it is possible for the MFP 10 to access different directory servers 30 by using different memory cards 2. Further, by storing the unique user name in each memory card 2, it is possible to set different privileges by a user basis. For example, one user may not be allowed to access addresses of irrelevant departments. In fact, this prevents access and use of irrelevant personal information for fraud.

Furthermore, as the search criteria are stored in the memory card 2 in advance, even more complicated search criteria can be set without requiring the user to input by operating the input unit 21 of the MFP 10. For example, by setting different search criteria such as "marketing department" or "outside company" in different memory cards 2, easier transmission to a desired destination can be achieved by using the appropriate memory card 2. Furthermore, the one-touch dial and the speed-dial can be assigned to each memory card 2 so that a different assignment can be set on a memory card 2 basis. Moreover, as the search criteria can be set in advance in the memory card 2, it is possible to transmit data using the information of the directory server 30 even by a data transmission apparatus having no input unit such as the input buttons 21a. Furthermore, the same search can be executed in a plurality of MFPs 10, 50 by using the same memory card 2.

Although examples of carrying out the invention have been described, those skilled in the art will appreciate that there are numerous variations and permutations that fall within the scope of the invention as set forth in the appended claims. It is to be understood that the subject matter defined in the appended claims is not necessarily limited to the specific features or act described above. Rather, the specific features and acts described above are disclosed as example forms of implementing the claims.

For example, it is also available that a memory card reader having a memory communication area is configured to communicate with the MFP 10, and the search criteria in the memory card 2 are obtained by the memory card reader.

Further, a mobile memory unit is not necessarily a card form as is with the memory card 2, but a mobile memory unit can be in any form as long as it is a mobile recording medium such as a USB memory and IC tag.

## Claims

1. A communication system (1), comprising:
a communication apparatus (10, 50); and
a destination information database (30) on which destination information indicating a destination of communication with the communication apparatus is stored;
the system being **characterized in that**:
the communication system (1) further comprises an external memory unit (2), which stores a plurality of search criteria for searching a destination of communication in the destination information database (30), the external memory unit (2) being detachably attachable to the communication apparatus (10, 50); and **in that**
the communication apparatus comprises:
a judging system (11), which judges whether the external memory unit (2) is attached to the communication apparatus;
a reader system (11, 15, 13e), for reading one of the plurality of search criteria stored in the external memory unit (2) in response to the judging system (11) judging that the external memory unit (2) is attached to the communication apparatus;
a destination information obtaining system (11, 18), which obtains the destination information designated based on the one of the plurality of search criteria read by the reader system (11, 15, 13e) from the destination information database (30); and
a destination setting system (11), which designates the destination of communication based on the destination information obtained by the destination information obtaining system (11, 18);
wherein the communication apparatus (10, 50) further comprises a plurality of operation keys (21b), in which an operation from a user is inputted; and
the reader system (11, 15, 13e) is adapted to read the search criterion from the external memory unit (2) associated with one of the plurality of operation keys (21b) or a combination of operation keys (21b), operated by a user, each of the stored search criteria in the external memory unit being associated with corresponding one of the plurality of operation keys (21b) or a combination of keys; and
the communication apparatus is adapted to issue the one of the plurality of search criteria read by the reader system (11, 15, 13e) to the destination information database (30).

2. The communication system (1) according to claim 1,
wherein the communication apparatus (10, 50) is configured to store a search criterion for searching a destination of communication in the destination information database, and
wherein the reader system (11, 15, 13e) reads the search criterion stored in the communication apparatus (10, 50) in response to the judging system (11) judging that the external memory unit (2) is not attached to the communication apparatus.

3. The communication system (1) according to claim 1 or claim 2,
wherein the external memory unit (2) stores authentication information that is used for accessing the destination information database (30), and
wherein the communication apparatus (10,50) is provided with:
an authentication information reader system (11,15) which reads the authentication information from the detachable device (2); and
an accessing system (11,18) which accesses the destination information database (30) using the authentication information read by the authentication information reader system (11,15).

4. The communication system (1) according to any one of claims 1-3,
wherein the communication apparatus (10,50) further comprises a plurality of communication units (23,24,25) to communicate with the destination of communication,
wherein the external memory unit (2) stores a first search criterion for designating information that designates the destination of communication and a second search criterion for communication method to communicate with the destination of communication while the designating information and the communication method of the destination of communication are associated with each other to be stored in the destination information database (30),
wherein the destination information obtaining system (11,18) obtains the communication method that meets the second search criterion to communicate with the designation of communication that meets the first search criterion from the destination information database (30), and
wherein communication between the communication apparatus (10,50) and the destination is established by using one of the plurality of communication units (23,24,25) to which the communication method obtained by the destination information obtaining system (11,16) is applicable.

5. The communication system (1) according to any one of claims 1-4,
wherein the communication apparatus (10,50) is capable of obtaining the destination information from a plurality of destination information databases (30) and further comprises a judging system (11), which judges as to whether the destination information has been obtained from one of the plurality of destination information databases (30) by the destination information obtaining system (11,18), and
wherein the destination information obtaining system (11,18) obtains the destination information that meets the search criterion from another destination information database (30) when the judging system (11) judges no destination information has been obtained from the one of the plurality of destination information databases (30).

6. The communication system (1) according to any one of the preceding claims wherein:
the destination information database (30) stores group information which indicates a group to which the destination belongs, the group information and the destination information being stored in association with each other in the destination information database (30); and
the destination information obtaining system (11,18) obtains the destination information of the destination which belongs to the group corresponding to the group information based on the search criterion.

7. A method of controlling a communication system (1), comprising:
a communication apparatus (10,50); and
a destination information database (30) on which destination information indicating a destination of communication with the communication apparatus is stored;
the communication system (1) further comprising an external memory unit (2), which stores a
plurality of search criteria for searching a destination of communication in the destination information database (30), the external memory unit (2) being
detachably attachable to the communication apparatus (10, 50);
the method being **characterised by**:
at the communication apparatus (1) the steps of:
judging whether the external memory unit (2) is attached to the communication apparatus;
reading one of the plurality of search criteria stored in the memory unit (2);
obtaining the destination information designated based on the read search criterion from the destination information database (30); and
setting the destination of communication based on the destination information obtained by the destination information obtaining system (11,18);
reading the search criterion from the external memory unit (2) associated with one of a plurality of operation keys (21b) or a combination of operation keys (21b) operated by a user, each of the stored search criteria in the external memory unit being associated with corresponding one of the plurality of operation keys (21b) or combination of keys; and
issuing the one of the plurality of search criteria read by the reader system (11, 15, 13e) to the destination information database (30).

8. A computer usable medium comprising computer readable instructions for controlling a computer to execute the method of claim 7.

## Patentansprüche

1. Kommunikationssystem (1), Folgendes umfassend:
eine Kommunikationsvorrichtung (10, 50) und
eine Zielinformationen-Datenbank (30), in der Zielinformationen gespeichert sind, die ein Ziel der Kommunikation mit der Kommunikationsvorrichtung anzeigen,
wobei das System **dadurch gekennzeichnet ist, dass**:
das Kommunikationssystem (1) ferner eine externe Speichereinheit (2) umfasst, die mehrere Suchkriterien zum Suchen eines Ziels der Kommunikation in der Zielinformationen-Datenbank (30) speichert, wobei die externe Speichereinheit (2) abnehmbar an der Kommunikationsvorrichtung (10, 50) angebracht werden kann, und dadurch, dass
die Kommunikationsvorrichtung Folgendes umfasst:
ein Beurteilungssystem (11), das beurteilt, ob die externe Speichereinheit (2) an der Kommunikationsvorrichtung angebracht ist,
ein Lesesystem (11, 15, 13e) zum Lesen eines der mehreren Suchkriterien, die in der externen Speichereinheit (2) gespeichert sind, in Reaktion auf das Beurteilen durch das Beurteilungssystem (11), dass die externe Speichereinheit (2) an der Kommunikationsvorrichtung angebracht ist,
ein Zielinformationen-Einholungssystem (11, 18) das basierend auf dem einen der mehreren Suchkriterien, die von dem Lesesystem (11, 15, 13e) aus der Zielinformationen-Datenbank (30) gelesen werden, die bestimmten Zielinformationen einholt, und
ein Zieleinstellungssystem (11), welches basierend auf den Zielinformationen, die durch das Zielinformationen-Erzielungssystem (11, 18) eingeholt werden, das Ziel der Kommunikation bestimmt,
wobei die Kommunikationsvorrichtung (10, 50) ferner mehrere Funktionstasten (21b) umfasst, an denen von einem Benutzer eine Funktion eingegeben wird, und
das Lesesystem (11, 15, 13e) dafür eingerichtet ist, das Suchkriterium aus der externen Speichereinheit (2) zu lesen, die einer der mehreren Funktionstasten (21b) oder einer Kombination von Funktionstasten (21b zugeordnet ist, die von einem Benutzer betätigt werden, wobei jedes der gespeicherten Suchkriterien in der externen Speichereinheit einer entsprechenden der mehreren Funktionstasten (21b) oder einer Kombination aus Tasten zugeordnet ist, und
die Kommunikationsvorrichtung dafür eingerichtet ist, das eine der mehreren, von dem Lesesystem (11, 15, 13e) gelesenen Suchkriterien an die Zielinformationen-Datenbank (30) auszugeben.

2. Kommunikationssystem (1) nach Anspruch 1,
wobei die Kommunikationsvorrichtung (10, 50) dafür konfiguriert ist, ein Suchkriterium zum Suchen eines Ziels der Kommunikation in der Zielinformationen-Datenbank zu suchen, und
wobei das Lesesystem (11, 15, 13e) das in der Kommunikationsvorrichtung (10, 50) gespeicherte Suchkriterium in Reaktion darauf liest, dass das Beurteilungssystem (11) beurteilt, dass die externe Speichereinheit (2) nicht an der Kommunikationsvorrichtung angebracht ist.

3. Kommunikationssystem (1) nach Anspruch 1 oder Anspruch 2,
wobei die externe Speichereinheit (2) Authentifizierungsinformationen speichert, die verwendet werden, um auf die Zielinformationen-Datenbank (30) zuzugreifen, und
wobei die Kommunikationsvorrichtung (10, 50) mit Folgendem versehen ist:
einem Authentifizierungsinformationen-Lesesystem (11, 15), das die Authentifizierungsinformationen aus dem abnehmbaren Gerät (2) liest, und
ein Zugriffssystem (11, 18), dass unter Verwendung der Authentifizierungsinformationen, die durch das Authentifizierungsinformationen-Lesesystem (11, 15) gelesen werden, auf die Zielinformationen-Datenbank (30) zugreift.

4. Kommunikationssystem (1) nach einem der Ansprüche 1 bis 3,
wobei die Kommunikationsvorrichtung (10, 50) ferner mehrere Kommunikationseinheiten (23, 24, 25) umfasst, um mit dem Ziel der Kommunikation zu kommunizieren,
wobei die externe Speichereinheit (2) ein erstes Suchkriterium für Bestimmungsinformationen, die das Ziel der Kommunikation bestimmen, und ein zweites Suchkriterium für das Kommunikationsverfahren zum Kommunizieren mit dem Ziel der Kommunikation speichert, während die Bestimmungsinformationen und das Kommunikationsverfahren des Ziels der Kommunikation einander zugeordnet werden, um in der Zielinformationen-Datenbank (30) gespeichert zu werden,
wobei das Zielinformationen-Einholungssystem (11, 18) aus der Zielinformationen-Datenbank (30) das Kommunikationsverfahren einholt, das das zweite Suchkriterium für das Kommunizieren mit dem Ziel der Kommunikation erfüllt, welches das erste Suchkriterium erfüllt, und
wobei die Kommunikation zwischen der Kommunikationsvorrichtung (10, 50) und dem Zielt unter Verwendung einer der mehreren Kommunikationseinheiten (23, 24, 25) eingerichtet wird, auf die das Kommunikationsverfahren anwendbar ist, das durch das Zielinformationen-Erzielungssystem (11, 16) eingeholt wird.

5. Kommunikationssystem (1) nach einem der Ansprüche 1 bis 4,
wobei die Kommunikationsvorrichtung (10, 50) in der Lage ist, die Zielinformationen aus mehreren Zielinformationen-Datenbanken (30) einzuholen, und ferner ein Beurteilungssystem (11) umfasst, das beurteilt, ob durch das Zielinformationen-Einholungssystem (11, 18) die Zielinformationen aus einer der mehreren Zielinformationen-Datenbanken (30) eingeholt wurden, und
wobei das Zielinformationen-Einholungssystem (11, 18) die Zielinformationen, die das Suchkriterium erfüllen, aus einer anderen Zielinformationen-Datenbank (30) einholt, wenn das Beurteilungssystem (11) beurteilt, dass aus der einen der mehreren Zielinformationen-Datenbanken (30) keine Zielinformationen eingeholt wurden.

6. Kommunikationssystem (1) nach einem der vorhergehenden Ansprüche, wobei:
die Zielinformationen-Datenbank (30) Gruppeninformationen speichert, die eine Gruppe anzeigen, zu der das Ziel gehört, wobei die Gruppeninformationen und die Zielinformationen in Zuordnung miteinander in der Zielinformationen-Datenbank (30) gespeichert sind, und
das Zielinformationen-Einholungssystem (11, 18) basierend auf dem Suchkriterium die Zielinformationen des Ziels einholt, das zu der Gruppe gehört, die den Gruppeninformationen entspricht.

7. Verfahren zum Steuern eines Kommunikationssystems (1), Folgendes umfassend:
eine Kommunikationsvorrichtung (10, 50) und
eine Zielinformationen-Datenbank (30), in der Zielinformationen gespeichert sind, die ein Ziel der Kommunikation mit der Kommunikationsvorrichtung anzeigen,
wobei das Kommunikationssystem (1) ferner eine externe Speichereinheit (2) umfasst, die mehrere Suchkriterien zum Suchen eines Ziels der Kommunikation in der Zielinformationen-Datenbank (30) speichert, wobei die externe Speichereinheit (2) abnehmbar an der Kommunikationsvorrichtung (10, 50) angebracht werden kann,
wobei das Verfahren **gekennzeichnet ist, durch**:
die folgenden Schritte an der Kommunikationsvorrichtung (1):
Beurteilen, ob die externe Speichereinheit (2) an der Kommunikationsvorrichtung angebracht ist,
Lesen eines der mehreren Suchkriterien, die in der externen Speichereinheit (2) gespeichert sind,
Einholen der bestimmten Zielinformationen basierend auf dem gelesenen Suchkriterium aus der Zielinformationen-Datenbank (30), und
Einstellen des Ziels der Kommunikation basierend auf den Zielinformationen, die durch das Zielinformationen-Einholungssystem (11, 18) eingeholt werden,
Lesen des Suchkriteriums aus der externen Speichereinheit (2), die einer der mehreren Funktionstasten (21b) oder einer Kombination von Funktionstasten (21b) zugeordnet ist, die von einem Benutzer betätigt werden, wobei jedes der gespeicherten Suchkriterien in der externen Speichereinheit einer entsprechenden der mehreren Funktionstasten (21b) oder einer Kombination aus Tasten zugeordnet ist, und
Ausgeben des einen der mehreren von dem Lesesystem (11, 15, 13e) gelesenen Suchkriterien an die Zielinformationen-Datenbank (30).

8. Von einem Computer verwendbares Medium, das computerlesbare Befehle zum Steuern eines Computers für das Ausführen des Verfahrens nach Anspruch 7 umfasst.

## Revendications

1. Système de communication (1), comprenant :
un appareil de communication (10, 50) ; et
une base de données d'informations de destination (30) sur laquelle des informations de destination indiquant une destination de communication avec l'appareil de communication sont stockées ;
le système étant **caractérisé en ce que** :
le système de communication (1) comprend en outre une unité de mémoire externe (2), qui stocke une pluralité de critères de recherche permettant de rechercher une destination de communication dans la base de données d'informations de destination (30), l'unité de mémoire externe (2) pouvant être fixée de manière amovible à l'appareil de communication (10, 50) ; et **en ce que**
l'appareil de communication comprend :
un système de détermination (11), qui détermine si l'unité de mémoire externe (2) est fixée à l'appareil de communication ;
un système de lecture (11, 15, 13e), permettant de lire un de la pluralité de critères de recherche stockés dans l'unité de mémoire externe (2) en réponse au système de détermination (11) déterminant que l'unité de mémoire externe (2) est fixée à l'appareil de communication ;
un système d'obtention d'informations de destination (11, 18), qui permet d'obtenir les informations de destination désignées en fonction de l'un de la pluralité de critères de recherche lus par le système de lecture (11, 15, 13e) à partir de la base de données d'informations de destination (30) ; et
un système de définition de destination (11), qui désigne la destination de communication en fonction des informations de destination obtenues par le système d'obtention d'informations de destination (11, 18) ;
l'appareil de communication (10, 50) comprenant en outre une pluralité de touches d'actionnement (21b), dans lesquelles un actionnement de la part d'un utilisateur est entré ; et
le système de lecture (11, 15, 13e) est conçu pour lire le critère de recherche depuis l'unité de mémoire externe (2) associé à une de la pluralité de touches d'actionnement (21b) ou une combinaison de touches d'actionnement (21b), actionnées par un utilisateur, chacun des critères de recherche stockés dans l'unité de mémoire externe étant associé à une touche correspondante de la pluralité de touches d'actionnement (21b) ou une combinaison de touches ; et
l'appareil de communication est conçu pour émettre l'un de la pluralité de critères de recherche lus par le système de lecture (11, 15, 13e) vers la base de données d'informations de destination (30).

2. Système de communication (1) selon la revendication 1,
dans lequel l'appareil de communication (10, 50) est conçu pour stocker un critère de recherche permettant de rechercher une destination de communication dans la base de données d'informations de destination, et
dans lequel le système de lecture (11, 15, 13e) lit le critère de recherche stocké dans l'appareil de communication (10, 50) en réponse au système de détermination (11) déterminant que l'unité de mémoire externe (2) n'est pas fixée à l'appareil de communication.

3. Système de communication (1) selon la revendication 1 ou la revendication 2,
dans lequel l'unité de mémoire externe (2) stocke des informations d'authentification qui sont utilisées pour accéder à la base de données d'informations de destination (30), et
dans lequel l'appareil de communication (10, 50) est équipé d' :
un système de lecture d'informations d'authentification (11, 15) qui lit les informations d'authentification depuis le dispositif amovible (2) ; et
un système d'accès (11, 18) qui accède à la base de données d'informations de destination (30) à l'aide des informations d'authentification lues par le système de lecture d'informations d'authentification (11, 15).

4. Système de communication (1) selon l'une quelconque des revendications 1 à 3,
dans lequel l'appareil de communication (10, 50) comprend en outre une pluralité d'unités de communication (23, 24, 25) pour communiquer avec la destination de communication,
dans lequel l'unité de mémoire externe (2) stocke un premier critère de recherche permettant de désigner des informations qui désignent la destination de communication et un deuxième critère de recherche pour un procédé de communication pour communiquer avec la destination de communication tandis que les informations de désignation et le procédé de communication de la destination de communication sont associés entre eux pour être stockés dans la base de données d'informations de destination (30),
dans lequel le système d'obtention d'informations de destination (11, 18) permet d'obtenir le procédé de communication qui satisfait au deuxième critère de recherche pour communiquer avec la désignation de communication qui satisfait au premier critère de recherche à partir de la base de données d'informations de destination (30), et
dans lequel la communication entre l'appareil de communication (10, 50) et la destination est établie à l'aide d'une de la pluralité d'unités de communication (23, 24, 25) auxquelles le procédé de communication obtenu par le système d'obtention d'informations de destination (11, 16) est applicable.

5. Système de communication (1) selon l'une quelconque des revendications 1 à 4,
dans lequel l'appareil de communication (10, 50) est capable d'obtenir les informations de destination à partir d'une pluralité de bases de données d'informations de destination (30) et comprend en outre un système de détermination (11), qui détermine si les informations de destination ont été obtenues à partir d'une de la pluralité de bases de données d'informations de destination (30) par le système d'obtention d'informations de destination (11, 18), et
dans lequel le système d'obtention d'informations de destination (11, 18) permet d'obtenir les informations de destination qui satisfont au critère de recherche à partir d'une autre base de données d'informations de destination (30) lorsque le système de détermination (11) détermine qu'aucune information de destination n'a été obtenue à partir de l'une de la pluralité de bases de données d'informations de destination (30).

6. Système de communication (1) selon l'une quelconque des revendications précédentes dans lequel :
la base de données d'informations de destination (30) stocke des informations de groupe qui indiquent un groupe auquel la destination appartient, les informations de groupe et les informations de destination étant stockées en association les unes aux autres dans la base de données d'informations de destination (30) ; et
le système d'obtention d'informations de destination (11, 18) permet d'obtenir les informations de destination de la destination qui appartient au groupe correspondant aux informations de groupe en fonction du critère de recherche.

7. Procédé de commande d'un système de communication (1), comprenant :
un appareil de communication (10, 50) ; et
une base de données d'informations de destination (30) sur laquelle des informations de destination indiquant une destination de communication avec l'appareil de communication sont stockées ;
le système de communication (1) comprend en outre une unité de mémoire externe (2), qui stocke une pluralité de critères de recherche permettant de rechercher une destination de communication dans la base de données d'informations de destination (30), l'unité de mémoire externe (2) pouvant être fixée de manière amovible à l'appareil de communication (10, 50) ;
le procédé étant **caractérisé par** :
dans l'appareil de communication (1) les étapes de :
détermination de savoir si l'unité de mémoire externe (2) est fixée à l'appareil de communication ;
lecture d'un de la pluralité de critères de recherche stockés dans l'unité de mémoire (2) ;
obtention des informations de destination désignées en fonction du critère de recherche de lecture à partir de la base de données d'informations de destination (30) ; et
définition de la destination de communication en fonction des informations de destination obtenues par le système d'obtention d'informations de destination (11, 18) ;
lecture du critère de recherche depuis l'unité de mémoire externe (2) associé à une pluralité de touches d'actionnement (21b) ou une combinaison de touches d'actionnement (21b) actionnées par un utilisateur, chacun des critères de recherche stockés dans l'unité de mémoire externe étant associé à une touche correspondante de la pluralité de touches d'actionnement (21b) ou une combinaison de touches ; et
émission de l'un de la pluralité de critères de recherche lus par le système de lecture (11, 15, 13e) vers la base de données d'informations de destination (30).

8. Support utilisable par ordinateur comprenant des instructions lisibles par ordinateur permettant de commander un ordinateur pour exécuter le procédé selon la revendication 7.
